# EUROPEAN PATENT SPECIFICATION

(11) **EP 2 885 796 B1**
(45) Date of publication and mention of the grant of the patent: **30.10.2019**
(21) Application number: 13765534.6
(22) Date of filing: 14.08.2013
(51) Int. Cl.: H01F 27/40, H01F 27/16

(54) **TEMPERATURE SENSING SYSTEM FOR POWER ELECTRONIC DEVICE**
TEMPERATURMESSSYSTEM FÜR EINE ELEKTRONISCHE STROMVORRICHTUNG
SYSTÈME DE DÉTECTION DE TEMPÉRATURE DE DISPOSITIF ÉLECTRONIQUE DE PUISSANCE

(30) Priority: 15.08.2012 US 201213586553
(43) Date of publication of application: 24.06.2015
(73) Proprietor: Siemens Aktiengesellschaft, 80333 München (DE)
(72) Inventor: KÖHLER, Bernd, 91301 Forchheim (DE); OSMAN, Richard H., Pittsburgh, Pennsylvania 15239 (US); DOSKY, Stefan von, 76149 Karlsruhe (DE); SCHORB, Herbert, 76199 Karlsruhe (DE)
(74) Representative: Isarpatent
(86) International application number: PCT/US2013/054827
(87) International publication number: WO 2014/028552

(56) References cited:
- EP-A1- 2 431 985
- GB-A- 1 475 407
- US-A1- 2004 158 428
- US-A1- 2012 092 114
- "Wireless Temperature Monitoring System", , 1 January 2011 (2011-01-01), XP055084234, Retrieved from the Internet: URL:http://static.schneider-electric.us/do cs/Electrical Distribution/0180IB0801.pdf [retrieved on 2013-10-16]
- MEI-SUNG KANG ET AL: "ZigBee wireless network for transformer load monitoring and temperature sensitivity analysis", INDUSTRY APPLICATIONS SOCIETY ANNUAL MEETING (IAS), 2011 IEEE, IEEE, 9 October 2011 (2011-10-09), pages 1-12, XP031990516, DOI: 10.1109/IAS.2011.6074398 ISBN: 978-1-4244-9498-9

## Description

### BACKGROUND

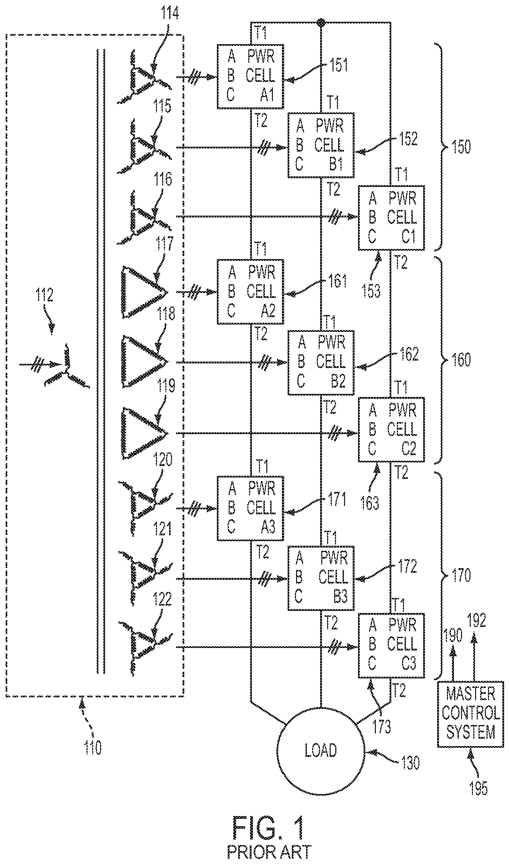

The use of power electronic devices such as a set of inverters to control a motor drive or other electrically powered device is well known. Components of one prior art motor control system are shown in FIG. 1. FIG. 1 illustrates various embodiments of a power supply (such as an AC motor drive) having nine such power cells. The power cells in FIG. 1 are represented by a block having input terminals A, B, and C; and output terminals T1 and T2. In FIG. 1, a transformer or other multi-winding device **110** receives three-phase, medium-voltage power at its primary winding **112**, and delivers power to a load **130** such as a three-phase AC motor via an array of single-phase inverters (also referred to as power cells) **151-153**, **161-163**, and **171-173**. Each phase of the power supply output is fed by a group of series-connected power cells, called herein a "phase-group" **150, 160** and **170**.

The transformer **110** includes primary windings **112** that excite a number of secondary windings **114** - **122**. Although primary windings **112** are illustrated as having a star configuration, a mesh configuration is also possible. Further, although secondary windings **114** - **122** are illustrated as having a delta or an extended-delta configuration, other configurations of windings may be used as described in U. S. Patent No. 5,625,545 to Hammond*.* In the example of FIG. 1 there is a separate secondary winding for each power cell. However, the number of power cells and/or secondary windings illustrated in FIG. 1 is merely illustrative, and other numbers are possible. Additional details about such a power supply are disclosed in U.S. Patent No. 5,625,545.

Several functional components of inverters can be subject to high thermal stress during operation. When high temperatures occur, such as a result of temporary overload operation or other operation outside of base ratings, inner temperatures of the components can reach or exceed critical temperatures. Such systems may be cooled by circulating cool water and/or air through the components in order to absorb heat and reduce the component temperature. Nonetheless, it is desirable to sense the temperature of the component to identify when the component approaches a critical temperature.

The large number of temperature measuring locations in a power electronic circuit, and the high thermal stress conditions of operation, make it difficult to adequately sense the temperature of a power electronic device.

The application notes and installation manual tilted "Wireless Temperature Monitoring System" discloses a system designed for measuring temperature in power electronic component using battery powered tags.

The document titled "ZigBee wireless network for transformer load monitoring and temperature sensitivity analysis" from MEI-SUNG KANG ET AL, discloses a similar system.

Document EP 2 431 985 discloses a power electronic device with a cooling system having temperature sensors at selected locations within the device.

Document US2012/0092114 discloses a power transformer condition monitor using sensor elements parasitically powered to operate with limited battery size.

This document describes methods and systems that attempt to solve at least some of the problems described above, and/or other problems.

### SUMMARY

In an embodiment, a power electronic device according to claim 1 is proposed.

### DESCRIPTION OF THE DRAWINGS

FIG. 1 illustrates an embodiment of a prior art power system for reducing harmonic distortion and correcting power factor.
FIG. 2 illustrates an example of a power electronic device and cooling system.
FIG. 3 illustrates various components of a temperature sensing system for one or more components of a power electronic device.

### DETAILED DESCRIPTION

As used in this document and in the appended claims, the singular forms "a," "an," and "the" include plural reference unless the context clearly dictates otherwise. Unless defined otherwise, all technical and scientific terms used in this document have the same meanings as commonly understood by one of ordinary skill in the art. As used in this document, the term "comprising" means "including, but not limited to."

Electronic drive systems such as those illustrated in FIG. 1 are commonly-used power electronic devices that may control loads such as medium voltage motors. As described above, such systems may use inverters or other power cells **151-153**, **161-163**, **171-173**. In operation, the cells are subject to high thermal stress, due to time-varying power loss. When higher temperatures occur, as in the case of temporary overload operation or other operation outside the cell's base ratings, inner temperatures of these or other power electronic devices components can reach or exceed critical temperatures.

For long-term reliable operation, it is desirable to monitor the temperature of power electronic devices. Components that may be monitored include, but are not limited to, inductors, transformers and semiconductor devices (IGBT, MOSFET, thyristors, etc.). However, the large number of temperature measuring locations in a power electronic device creates a challenge because the locations are often at a high voltage potential with respect to ground and to each other. Therefore it is a problem to have power supply and data wires to communicate with the sensors which are in contact with high voltage. In addition, these locations are in a powerful electromagnetic environment, caused by large currents containing high harmonics, as well as high alternating voltages. The sensors generate very small electrical signals which could easily be disturbed by the strong electromagnetic fields, which poses yet another challenge.

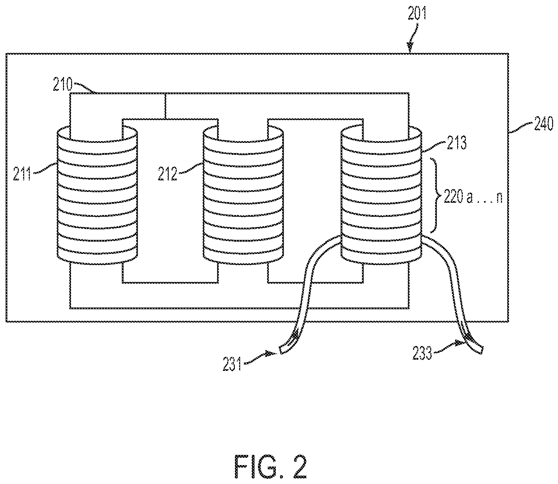

FIG. 2 illustrates a system that addresses challenges such as those described above. FIG. 2 illustrates the system in the context of a three-phase, medium voltage transformer **201.** As used in this document, "medium voltage" generally refers to voltages that are denoted in the field of power as such. Examples include 1 kilovolts (kv) - 35 kv, 600 volts - 69 kv, 2.4 kv - 39 kv, or any combination of the upper and lower limits of these ranges. However, the system may be used with other power electronic devices as well. FIG. 2 illustrates the secondary side of a three-phase, medium voltage transformer including a conductive core **210** and three phases that **211, 212, 213** that each include a set of primary winding and secondary windings **220a** ... **220n.** In a medium voltage transformer, any number of secondary windings may be used as conductive elements, such as 15-20 secondaries per phase, each having 5-20 turns each. Other configurations are possible. Some or all of the transformer components may be contained in a housing **240.**

A cooling system is in fluid communication with the conductive element. The cooling system may have one or more conduits that circulate air, water, or other gas or liquid through the area of the conductive elements. As shown in FIG. 2, the cooling system for one phase of the transformer includes an inlet conduit **231** and an outlet conduit **233** that are at least partially positioned within the housing **240.** Multiple inlet and outlet conduits may be included for each phase.

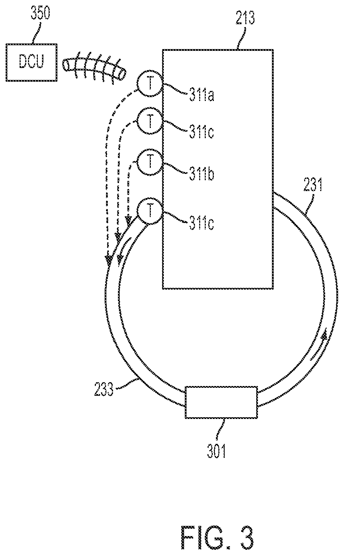

FIG. 3 illustrates a system that focuses on one component **213** of the power electronic device, in this case one phase of the transformer. Referring to FIG. 1, the phase may include a set of conductive coils **213**, and the system includes a cooling unit **301**, and inlet conduit **231** and an outlet conduit **233**. Fluid or gas is cooled by the cooling unit **301**, send to component **213** via the inlet conduit **231** where it absorbs heat. The fluid or gas then returns to the cooling unit **301** via the outlet conduit **233**. Multiple inlet and outlet conduits may be used, each of which returns to the same cooling unit. Alternatively, multiple cooling units may be used.

A temperature sensing tag **311a** is positioned to contact the outlet conduit **213** and detect the temperature of the outlet conduit. Any number of temperature sensing tags **311a** ... **311n** may be used, such as one tag for each conduit. The temperature sensing tags may be positioned within the transformer housing, at or very near to the point where the conduit interfaces with the component. The tags may be oriented so that each tags are each positioned along an axis that is substantially perpendicular with that of its neighboring tags, to reduce the risk of arcing. The temperature sensing tags each include a power supply, a temperature sensor, and an antenna so that they can wirelessly send signals corresponding to the sensed temperature to a remote data collection unit.

The tags may be of the type known as radio frequency identification (RFID) tags, which serve as passive temperature sensors. In some embodiments, the tags may harvest energy from ultra high frequency (UHF) fields, capture the energy and store it in an energy storage device (such as an internal capacitor) for use as a power source. According to the invention, the tag senses the temperature when the storage device's charge reaches a threshold (such as substantially or fully loaded), and then transmit a signal with the sensed temperature along with an identification code for the tag. For example, the power supply for a tag may include an induction coil positioned to harvest magnetic energy from a field near the windings (or other components) when the windings are operational and convert the magnetic energy to a voltage. Other configurations are possible. In other embodiments, the power supply may be a thermoelectric device that can generate a voltage due to the temperature differential between a hot outlet tube and air inside an enclosure.

The signals from the tags are received by one or more data collection units **350** that are configured to receive signals from the antennae of the temperature sensing tags. Each data collection unit may include a transmitter, a processor, and a memory. The memory may contain programming instructions that, when executed, the processor to send, via the transmitter, a polling signal to one or more of the temperature sensing tags. The polling signal may actuate a response that the data collection unit **350** will receive and use to determine the temperature sensed by the tag.

Data communication between the tags and data collection unit may occur by any suitable means. For example, the communication may use radio waves at VHF or UHF frequencies. If so, sensing data and sensor identification data for a tag may be stacked together in a short telegram and sent via the tag's antenna to the transmitter station. All the involved tags/sensors may operate in the same manner and send a data telegram to the data collection unit at periodic intervals, such as every 30 seconds. This may be accomplished by "blind" transmissions, where each tag emits its signal in an uncoordinated manner on a carrier frequency, common for all sensor elements. The repetition rate is may be preset to any suitable time, such as about 30 seconds. If the telegrams of two or more sensors collide, the probability for interference between the telegrams could be reduced by arbitrarily choosing small repetition time offsets (added to the basic period while sensor presetting, for instance at assembly time) and another additional small variation per sensor on a cycle by cycle base. The data collection unit may continuously listen for telegrams, identifies the sender of each telegram, and assembles the data in a bundle to be transferred it to an automation/monitoring unit. Alternative, all the sensor elements may be controlled by the transmission unit. If so, the sensors may not emit any signal until they are interrogated by a message from the data collection unit. The triggers are coordinated to give enough idle time to every sensor to gather and store enough energy to be able to answer on the next request.

In various embodiments, it may sufficient to gather sensed temperature values within time periods of about 30 seconds. This may be sufficient for most cases of power electronic circuits, where the size of the involved components is so large as to limit the maximum slope of temperature change over time. Other configurations may require shorter or longer cycles. Taking 30 seconds as an example, then a reasonable time division is 1 second for data transfer (proposing an upper limit) and 29 seconds for energy harvesting. If the sensor element handles both the harvesting and communication in parallel, then uninterrupted harvesting would be possible.

While several embodiments of the invention have been described in this document by way of example, those skilled in the art will appreciate that various modifications, alterations, and adaptations to the described embodiments may be realized without departing from the scope of the invention defined by the appended claims.

## Claims

1. A power electronic device, comprising:
a housing (240);
a conductive element (213) positioned within the housing and rated for at least a medium voltage;
a cooling system (301) in fluid communication with the conductive element, the cooling system comprising a plurality of outlet conduit elements (233) that are positioned within the housing;
a plurality of temperature sensing tags (311a-311c) wherein each of the tags is attached to one of the outlet conduits and comprises a power supply, a temperature sensor, and an antenna; and
a data collection unit comprising a receiver that is configured to receive signals from the antennae of the temperature sensing tags;
wherein the power supplies comprise at least one of:
a thermoelectric device,
an induction coil positioned to harvest magnetic energy from a field near the conductive element when the conductive element is operational and convert the magnetic energy to a voltage, and
an antenna positioned to harvest electromagnetic energy from a field near the conductive element when the conductive element is operational and convert the electromagnetic energy to a voltage; and
wherein at least one of the temperature sensing tags comprises an energy storage device configured to store a charge, wherein the at least one of the temperature sensing tags transmits an identifier and data representative of sensed temperature when the stored charge reaches a threshold.

2. The device of claim 1, wherein:
the conductive element comprises a multi-phase transformer;
each phase of the transformer comprises a plurality of windings;
the cooling system comprises a water cooling system in fluid communication with at least one of the windings.

3. The device of claim 1 wherein the data collection unit further comprises a transmitter, a processor, and a memory containing programming instructions configured to instruct the processor to send, via the transmitter, a polling signal to one or more of the temperature sensing tags.

## Patentansprüche

1. Leistungselektronikvorrichtung, umfassend:
ein Gehäuse (240);
ein leitfähiges Element (213), das innerhalb des Gehäuses angeordnet und für wenigstens eine mittlere Spannung ausgelegt ist;
ein Kühlsystem (301) in Fluidverbindung mit dem leitfähigen Element, wobei das Kühlsystem mehrere Auslassleitungselemente (233) umfasst, die innerhalb des Gehäuses angeordnet sind;
mehrere Temperaturmessfühler (311a-311c),
wobei jeder der Fühler an einer der Auslassleitungen angebracht ist und eine Stromversorgung, einen Temperatursensor und eine Antenne umfasst; und
eine Datenerfassungseinheit, die einen Empfänger umfasst, welcher dafür ausgelegt ist, Signale von den Antennen der Temperaturmessfühler zu empfangen;
wobei die Stromversorgungen wenigstens eines der folgenden umfassen:
eine thermoelektrische Vorrichtung,
eine Induktionsspule, die derart angeordnet ist, dass sie magnetische Energie aus einem Feld nahe dem leitfähigen Element gewinnt, wenn das leitfähige Element betriebsbereit ist, und die magnetische Energie in eine Spannung umwandelt, und
eine Antenne, die derart angeordnet ist, dass sie elektromagnetische Energie aus einem Feld nahe dem leitfähigen Element gewinnt, wenn das leitfähige Element betriebsbereit ist, und die elektromagnetische Energie in eine Spannung umwandelt; und
wobei wenigstens einer der Temperaturmessfühler eine Energiespeichervorrichtung umfasst, die dafür ausgelegt ist, eine Ladung zu speichern, wobei der wenigstens eine der Temperaturmessfühler eine Kennung und Daten, die für eine gemessene Temperatur repräsentativ sind, sendet, wenn die gespeicherte Ladung einen Schwellwert erreicht.

2. Vorrichtung nach Anspruch 1, wobei:
das leitfähige Element einen Mehrphasentransformator umfasst;
jede Phase des Transformators mehrere Wicklungen umfasst;
das Kühlsystem ein Wasserkühlsystem in Fluidverbindung mit wenigstens einer der Wicklungen umfasst.

3. Vorrichtung nach Anspruch 1, wobei die Datenerfassungseinheit ferner einen Sender, einen Prozessor und einen Speicher, der Programmanweisungen enthält, welche dafür ausgelegt sind den Prozessor anzuweisen, über den Sender ein Abfragesignal an einen oder mehrere der Temperaturmessfühler zu senden, umfasst.

## Revendications

1. Dispositif électronique de puissance, comprenant :
un boîtier (240) ;
un élément conducteur (213) positionné à l'intérieur du boîtier et étalonné pour au moins une tension moyenne ;
un système de refroidissement (301) en communication fluidique avec l'élément conducteur, le système de refroidissement comprenant une pluralité d'éléments de conduits de sortie (233) positionnés à l'intérieur du boîtier ;
une pluralité de balises de détection de température (311a-311c), chacune des balises étant attachée à un des conduits de sortie et comprenant une alimentation électrique, un capteur de température, et une antenne ; et
une unité de collecte de données comprenant un récepteur configuré pour recevoir des signaux depuis les antennes des balises de détection de température ;
dans lequel les alimentations électriques comprennent au moins un :
d'un dispositif thermoélectrique,
d'une bobine d'induction positionnée pour récolter l'énergie magnétique depuis un champ proche de l'élément conducteur quand l'élément conducteur est opérationnel et convertir l'énergie magnétique en une tension, et
une antenne positionnée pour collecter une énergie électromagnétique depuis un champ proche de l'élément conducteur quand l'élément conducteur est opérationnel et convertir l'énergie électromagnétique en une tension ; et
dans lequel au moins une des balises de détection de température comprend un dispositif de stockage d'énergie configuré pour stocker une charge, l'au moins une des balises de détection de température transmettant un identifiant et des données représentatives d'une température détectée quand la charge stockée atteint un seuil.

2. Dispositif selon la revendication 1, dans lequel :
l'élément conducteur comprend un transformateur multi-phases ;
chaque phase du transformateur comprend une pluralité d'enroulements ;
le système de refroidissement comprend un système de refroidissement à l'eau en communication fluidique avec au moins un des enroulements.

3. Dispositif selon la revendication 1 dans lequel l'unité de collecte de données comprend en outre un émetteur, un processeur, et une mémoire contenant des instructions de programmation configurées pour ordonner au processeur d'envoyer, par l'intermédiaire de l'émetteur, un signal d'interrogation à une ou plusieurs de balises de détection de température.
